# EUROPÄISCHE PATENTSCHRIFT

(11) **EP 1 477 905 B1**
(45) Veröffentlichungstag und Bekanntmachung des Hinweises auf die Patenterteilung: **06.06.2007**
(21) Anmeldenummer: 04009748.7
(22) Anmeldetag: 23.04.2004
(51) Int. Cl.: G06F 13/40, G05B 19/05

(54) **Projektierungsverfahren und Diagnoseverfahren für ein Automatisierungssystem**
Design method and diagnostic method for an automation system
Procédé de conception et procédé de diagnostic pour un système d'automatisation

(30) Priorität: 16.05.2003 DE 10322273
(43) Veröffentlichungstag der Anmeldung: 17.11.2004
(73) Patentinhaber: SIEMENS AKTIENGESELLSCHAFT, 80333 München (DE)
(72) Erfinder: Brousek, Norbert, 90766 Fürth (DE); Dausend, Stefan, 91226 Schwabach (DE); Weissbach, Bernhard Dr., 09669 Frankenberg (DE)

(56) Entgegenhaltungen:
- DE-A1- 10 052 624
- DE-A1- 10 131 943
- DE-A1- 19 917 102

## Beschreibung

Die vorliegende Erfindung betrifft ein Projektierungs- und ein Diagnoseverfahren für ein Automatisierungssystem. Insbesondere betrifft die Erfindung ein Projektierungsverfahren zum Ausbau eines modularen Automatisierungssystems, sowie eine Diagnoseverfahren zur Laufzeit des modularen Automatisierungssystems.

Automatisierungssysteme sind allgemein bekannt. Insbesondere modulare Automatisierungssysteme, bei denen mehrere verschiedene Module über ein Bussystem miteinander verbunden sind. So weist beispielsweise der Dezentrale-Peripherie-Normslave "Si-matic ET 200S" von Siemens ein zentrales Bussystem mit einer Anzahl von Steckplätzen auf. An diese Steckplätze werden verschiedene Module, wie beispielsweise Steuermodule, Spannungsversorgungsmodule, Ein- und Ausgabemodule und andere Technologiemodule modular angesteckt und so miteinander verbunden. Zusätzlich können Steckplätze durch so genannte Reservemodule vorbelegt werden. Diese Reservemodule haben keine elektrische Funktion und dienen letztendlich nur der Platzreservierung eines Steckplatzes. An diesen Steckplätzen können dann optional, zu einem späteren Zeitpunkt, weitere Module angesteckt werden. Dadurch kann das Bussystem des Normslaves bereits für einen Maximalausbau, das heißt eine bestimmte Anzahl von Basismodulen und Optionenmodulen, vorkonfiguriert werden. Reservemodule, die Steckplätze für bestimmte Optionenmodule freihalten, können dann zu einem späteren Zeitpunkt durch entsprechende Optionenmodule ausgetauscht werden. Sowohl die Basismodule als auch die Optionenmodule des Automatisierungssystems müssen projektiert werden. Erfolgt die Projektierung aber im Vorfeld schon unter Berücksichtigung der möglichen Optionenmodule, obwohl noch Reservemodule gesteckt sind, kommt es zur Laufzeit des Systems zu entsprechenden Diagnosemeldungen. Das heißt zur Laufzeit, insbesondere auch beim Anlauf, wird überprüft ob die Steckplätze tatsächlich auch mit den projektierten Modulen belegt sind. Ist dies nicht der Fall, erfolgt eine entsprechende Fehlermeldung an den Anwender. Fehlermeldungen, die sich nur aufgrund der Tatsache ergeben, dass ein Reservemodul anstelle eines projektierten Optionenmoduls steckt, müssen vom Anwender von anderen Fehlermeldungen selektiert und entsprechend ignoriert werden. Sollen solche Diagnosemeldungen vermieden werden, muss das System immer dann neu projektiert werden, sobald ein Reservemodul durch ein Optionenmodul ausgetauscht wird. Damit ist aber die einfache und schnelle Handhabung von Optionenmodulen nicht mehr gegeben und damit die Nachrüstung von Optionen aufwendig.

Die Deutsche Offenlegungsschrift DE 10131943 offenbart ein Verfahren zur automatischen Projektierung der Steckplatzbelegung eines Rocks.

Aufgabe der vorliegenden Erfindung ist es, entsprechende Verfahren zur Verfügung zu stellen, die eine möglichst einfache und schnelle Handhabung von Optionenmodulen und damit auch der Reservemodule in einem modularen Automatisierungssystem erlauben.

Die Aufgabe wird gelöst durch ein Projektierungsverfahren zum Ausbau eines modularen Automatisierungssystems nach Anspruch 1, sowie durch ein Diagnoseverfahren zur Laufzeit eines modularen Automatisierungsverfahren nach Anspruch 3.

Dadurch, dass schon während der Projektierung ein Statusfeld generiert wird, welches Informationen darüber enthält, welche Steckplätze für Optionenmodule vorgesehen sind, und diese Informationen bei der späteren Diagnose während der Laufzeit des Automatisierungssystems berücksichtigt werden, erhält man ein einfaches modulares Automatisierungssystem. Das erfindungsgemäße Projektierungsverfahren erlaubt zusammen mit dem erfindungsgemäßen Diagnoseverfahren, dass ein modulares Automatisierungssystem auf einfache Weise zu einem späteren Zeitpunkt mit Optionen nachbestückt werden kann, ohne dass eine aufwendige Neuprojektierung notwendig ist. So kann ein Anwender die Optionen dann einfach nachrüsten, indem er ein Reservemodul durch ein entsprechendes Optionenmodul auf den dafür vorgesehenen Steckplatz ersetzt und den logischen Zustand des entsprechenden Bits in einem Steuerbitfeld verändert. Somit lässt sich in kurzer Zeit das modulare Automatisierungssystem optional anpassen, ohne dass entsprechend ausgebildete Fachkräfte für eine Neuprojektierung notwendig sind.

Weitere vorteilhafte Ausführungen und bevorzugte Weiterbildungen der Erfindung sind den Unteransprüchen sowie der nachfolgenden Beschreibung der Ausführungsbeispiele zu entnehmen,
Es zeigen:
- Fig.1: eine erste Ausführung einer Oberfläche zum Markieren von Steckplätzen,
- Fig.2: eine zweite Ausführung einer Oberfläche zum Markieren von Steckplätzen,
- Fig.3: ein Ablaufdiagramm für das erfindungsgemäße Diagnoseverfahren.

Das erfindungsgemäße Projektierungs- und Diagnoseverfahren für ein Automatisierungssystem soll nun beispielhaft an Hand des Dezentralen-Peripherie-Normslaves ET 200S der Firma Siemens näher beschrieben werden. Damit während der Laufzeit des modularen Automatisierungssystems das erfindungsgemäße Diagnoseverfahren angewandt werden kann, müssen schon im voraus, das heißt während der Projektierung mittels eines Engineeringtools, die Steckplätze entsprechend markiert werden. Diese Informationen werden dann der Kopfbaugruppe des Dezentralen-Peripherie-Normslaves mittels eines Parametriertelegramms mitgeteilt. Dazu wird im Parametriertelegramm des Automatisierungssystems ein Statusbitfeld reserviert. Dessen Länge, das heißt die Anzahl der Bits, ist gleich der Anzahl der maximal möglichen Steckplätze des modularen Automatisierungssystems. Das bedeutet, dass jedem Steckplatz des Bussystems genau ein Bit des Statusbitfeldes zugeordnet ist. Im vorliegenden Fall ist die Anzahl der maximal möglichen Steckplätze gleich 64 und somit ist ein Bitfeld mit 64 Bit oder entsprechend 8 Byte notwendig. Die Eingabe während der Projektierung kann dann beispielsweise über eine Geräte-Stammdaten-Datei oder ein Engineeringtool, wie beispielsweise "STEP7" der Firma Siemens, erfolgen.

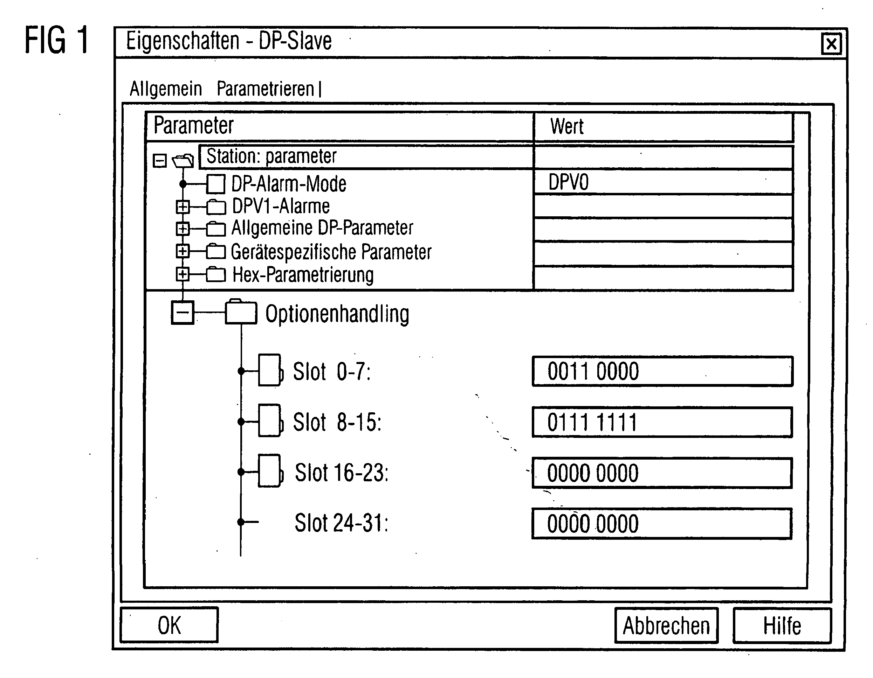

Fig.1 zeigt eine erste Ausführung einer Benutzeroberfläche, wie sie beispielsweise für eine Geräte-Stammdaten-Datei vorgesehen werden kann. Dem Anwender werden dazu auf der linken Seite die Anordnung der Steckplätze S0,S1,... angezeigt und rechts daneben befindet sich ein entsprechendes Eingabefeld für die Eingabe von binären Zahlen. Hier ist beispielsweise dem Steckplatz S0 die erste binäre Zahl (hier eine logische "0") zugeordnet. Entsprechend wird mit für die anderen Steck-plätze verfahren. Durch Eingabe von binären Zahlen, entweder einer logischen "0" oder einer logischen "1" kann dann während der Projektierung markiert werden, welche der Steckplätze S0,S1,... mit Basismodulen belegt sein sollen und welche mit Optionenmodulen belegt sein können. So bedeutet im vorliegenden Beispiel eine logische "0", dass ein Steckplatz mit einem Optionenmodul belegt werden kann aber ggf. durch ein Reservemodul belegt ist. Eine logische "1" bedeutet, dass ein Steckplatz mit einem Basismodul belegt sein muss. So ist im vorliegenden Fall für den Steckplatz S2 ein Basismodul projektiert, welches auf jeden Fall auch stecken muss, um im späteren Diagnoseverfahren nicht zu einer Fehlermeldung zu führen. Dagegen kann beispielsweise der Steckplatz S8 mit einem Optionenmodul oder ein Reservemodul belegt sein.

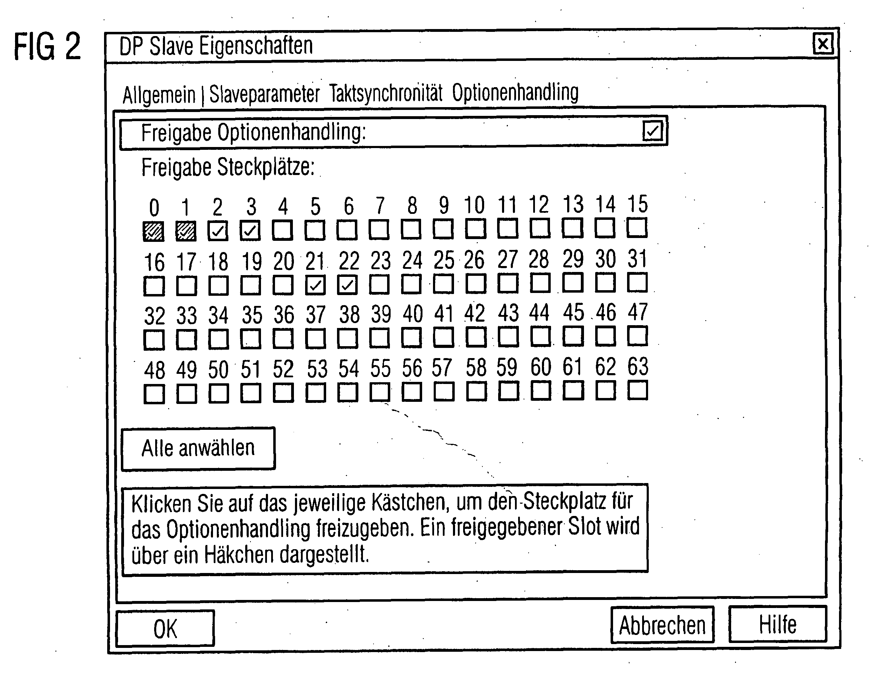

Fig.2 zeigt eine andere Ausführung einer Benutzeroberfläche wie sie beispielsweise bei "STEP7" vorgesehen werden kann. Die hier gezeigte Oberfläche erlaubt die Parametrierung von bis zu 64 Steckplätzen, das heißt bis zu 64 Module könnten innerhalb eines Automatisierungssystems an das Bussystem angeschlossen werden. Für die Übertragung der Parameter an die Kopfbaugruppe, ist auch hier ein Bitfeld von 64 Bit, das heißt 8 Byte vorgesehen, dass mittels des Parametriertelegramms an die Kopfbaugruppe übertragen wird. In der in Fig.2 gezeigten Oberfläche entspricht jede Box 0-63 einem Steckplatz, wobei die Steckplätze 0 und 1 grau hinterlegt sind. Dies soll andeuten, dass diese beiden Steckplätze nicht durch den Anwender verändert werden können. Hier ist das Stecken eines Optionenmoduls oder eines Reservemoduls unzulässig, da auf Steckplatz 0 in der Regel immer ein Kopfbaugruppenmodul und auf Steckplatz 1 immer ein Spannungsversorgungsmodul stecken muss. Auf der Oberfläche ist eine weitere Box vorgesehen, mit der der Anwender zuerst das Optionenhandling freigeben kann. Das heißt, nur wenn, wie im vorliegenden Fall gezeigt, ein Haken in der entsprechenden Box am oberen Ende zu finden ist, ist die modulare Projektierung mittels Optionen-modulen und Reservemodulen möglich. Erst dann kann der Anwender durch Anklicken der entsprechenden Boxen 0-63 die entsprechenden Steckplätze für Optionenhandling freischalten. Ob Steckplätze für das Optionenhandling freigeschaltet sind, kann ebenfalls wieder durch einen Haken angezeigt werden. Diese zweistufige Vorgehensweise ist sinnvoll, damit der Anwender prinzipiell Adressen für das Optionenhandling reservieren kann, auch wenn er diese nicht sofort nutzt. Vorteilhafterweise sind in der Grundeinstellung alle Stellplätze deaktiviert. Weiterhin ist es vorteilhaft, wenn die Maske eine Schaltfläche "Alle auswählen" enthält, damit der Anwender alle Steckplätze auf einmal freischalten kann. Dies soll die Handhabung dann vereinfachen, wenn sehr viele Optionen aktiviert werden sollen. Nach Beendigung der Auswahl, das heißt durch Drücken beispielsweise einer mit "OK" bezeichneten Schaltfläche wird das entsprechend erzeugte Statusbitfeld mittels des Parametriertelegramms dem Kopfbaugruppenmodul mitgeteilt. Zu einem späteren Zeitpunkt, insbesondere während des Anlaufs des Automatisierungssystems, verfügt die Kopfbaugruppe dann über die notwendigen Informationen, um überprüfen zu können, welche der Steckplätze für das Optionenhandling freigegeben sind. Diese Steckplätze können dann im späteren Diagnoseverfahren besonders geprüft werden, während die anderen Steckplätze, das heißt die Steckplätze, die für Basismodule freigegeben sind, nur daraufhin überprüft werden, ob auch das entsprechend projektierte Basismodul angesteckt ist oder nicht.

Auf diese Diagnose zur Überprüfung, ob ein Steckplatz tatsächlich so wie projektiert, mit einem entsprechenden Modul belegt ist, soll hier nicht näher eingegangen werden. Solche Diagnoseverfahren sind heutzutage bei der Überprüfung von Automatisierungssystemen üblich und daher dem Fachmann wohl bekannt.

Vielmehr beschränkt sich die vorliegende Beschreibung auf die für die Erfindung wesentlichen Schritte, das heißt auf das Markieren von Steckplätzen. Nach der Projektierung gemäß dem erfindungsgemäßen Verfahren können dann in einem zweiten Schritt zur Laufzeit des Automatisierungssystems die einzelnen Optionen auf einfache Art und Weise aktiviert oder deaktiviert werden. Dafür muss für den Anwender eine Schnittstelle geschaffen werden, mit der er dem Automatisierungssystem mitteilen kann, ob nun auf einem, gemäß dem erfindungsgemäßen Projektierungsverfahren markierten Steckplatz ein Reservemodul stecken darf oder ob das entsprechende Optionenmodul stecken muss. Die Schnittstelle sollte daher in ihrer einfachsten Form eine Eingabeoberfläche zur Eingabe binärer Daten in ein Steuerbitfeld ermöglichen. Dieses Steuerbitfeld kann insbesondere entsprechend dem oben beschriebenen Statusbitfeld aufgebaut sein, wobei aber nur die darin enthaltenen Informationen für diejenigen Steckplätze relevant sind, die zuvor bei der Projektierung als Option markiert wurden. Für die als mit Basismodulen projektierten Steckplätze ist die in diesem Steuerbitfeld enthaltene Information nicht relevant und wird nicht ausgewertet. Für einen Dezentralen Peripherie Normslave DPV0 kann diese Eingabe beispielsweise dadurch erfolgen, dass der Anwender der Kopfbaugruppe über den Ausgangsbereich mitteilt, für welche Steckplätze die Prüfung nun verschärft werden muss und für welche nicht. Enthält beispielsweise das Steuerbitfeld für einen Steckplatz eine logische "0", so ist die Prüfung während des Diagnoseverfahrens tolerant. Das bedeutet, auf dem entsprechenden Steckplatz darf entweder ein Reservemodul oder das projektierte Optionenmodul stecken. Enthält das Steuerbitfeld eine logische "1" so arbeitet die Kopfbaugruppe mit einer höheren Prüfschärfe. Das bedeutet, dass an diesem Steckplatz nur das tatsächliche projektierte Optionenmodul zulässig ist. Steckt ein anderes Modul, sei es das Reservemodul oder ein anders nicht für diesen Steckplatz projektiertes Modul, wird eine entsprechende Fehlermeldung ausgegeben. Das heißt der Anwender hat somit die Möglichkeit zur Laufzeit Optionen, die er vorher schon projektiert hat, auf einfache art und Weise zu aktivieren oder zu deaktivieren. Der Anwender ist somit flexibler und schneller bei der Anpassung von Optionen des Automatisierungssystems. Bei dem soeben beschriebenen Verfahren bei einem DPV0 Slave erfolgt die Übertragung des Steuerbitfeldes in zyklischen Abständen über die Nutzdatenschnittstelle zur Kopfbaugrupppe.

Wird der Normslave als DPV1 Slave betrieben, kann die Bearbeitung des Steuerbitfeldes über Datensätze erfolgen. Die Hantierung und der Transport kann anwendergetriggerterfolgen, das heißt er wird nicht zyklisch wiederkehrend erfolgen. Im Falle des DPV1 Slaves teilt der Anwender der Kopfbaugruppe über eine entsprechende Schnittstelle zum Schreiben von Datensätzen mit, für welche Steckplätze die Prüfung ab sofort verschärft werden muss und für welche nicht. Schreibt er beispielsweise für einen Steckplatz eine logische "0", so ist die Prüfung weiterhin tolerant, das heißt auf dem Modul darf entweder das Reservemodul oder das Optionenmodul stecken, wenn dieser Steckplatz entsprechend mit dem Statusbitfeld freigeschaltet wurde. Wird im Steuerbitfeld eine logische "1" geschrieben und anschließend übertragen, arbeitet ab sofort die Kopfbaugruppe mit einer höheren Prüfschärfe für diesen Steckplatz. Das heißt an diesem Steckplatz ist nur noch das tatsächlich projektierte Modul zulässig. Steckt ein anderes Modul, dann greifen die bekannten Diagnosemechanismen des Dezentralen Peripherie Normslaves. Wird das Steuerbitfeld sowohl zyklisch über die Nutzdatenschnittstelle übertragen als auch anwendergetriggert über Datensätze, so ist es vorteilhaft, dass die zyklische Übertragung die höhere Priorität hat.

Mit den bisher beschriebenen Varianten ist somit das Aktivieren von Option, bzw. der entsprechenden Optionenmodule, ohne ein Engeneeringtool, wie beispielsweise Step 7, möglich. Das heißt das Aktivieren bzw. Deaktivieren von Optionen erfordert keine Neuprojektierung des Automatisierungssystems.

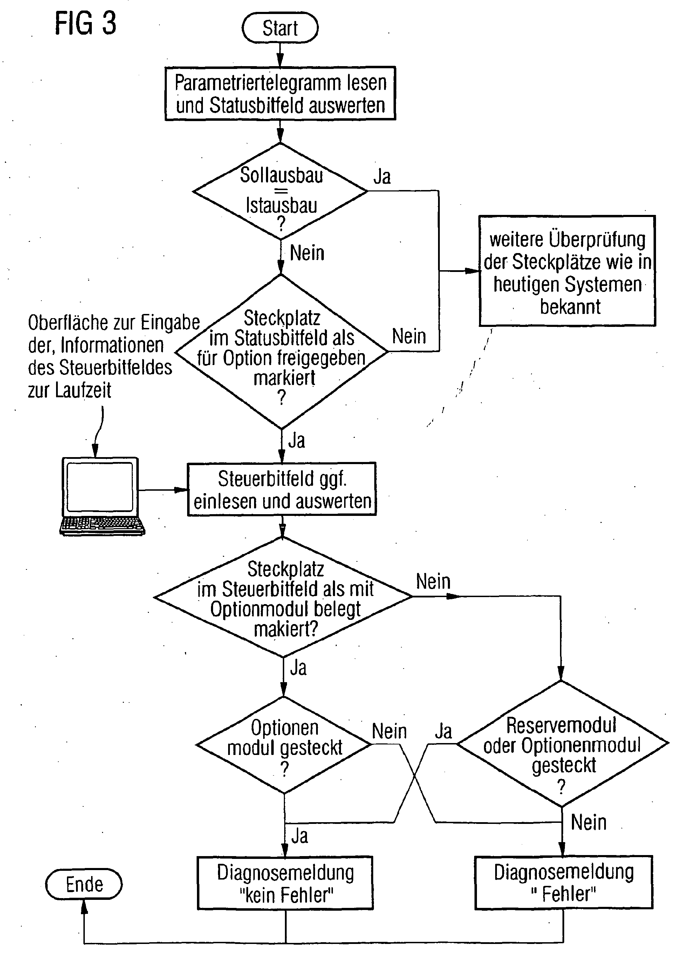

Anhand von Fig.3 soll nun das erfindungsgemäße Diagnoseverfahren näher erläutert werden. In einem ersten Schritt wird dafür das Statusbitfeld im Parametriertelegramm ausgelesen und ausgewertet. Das ist die Parametrierung, welche die Kopfbaugruppe mittels Parametriertelegramm während der Projektierung vom Anwender erhalten hat. Entsprechend der im übertragenen Statusbitfeld enthaltenen Information sind Steckplätze für die Belegung mit Basismodulen und Optionenmodulen markiert. Diese Markierungen sind solange gültig, bis der Anwender aus seinem Anwenderprogramm heraus der Kopfbaugruppe in einem Steuerbitfeld eine andere Information übergibt. Das bedeutet, es darf zunächst sowohl das Reservemodulals auch ein Basismodul auf so einem Steckplatz stecken und es wird keine Diagnose nach einem der heute bekannten Verfahren ausgelöst. Zu einem späteren Zeitpunkt rüstet nun der Anwender die Option nach, d.h. er tauscht beispielsweise ein Reservemodul durch das entsprechend vorprojektierte Optionsmodul aus. Mittels des Anwenderprogramms teilt er dies der Kopfbaugruppe über das oben beschrieben Steuerbitfeld mit, indem er nun die Prüfung aktiviert. Das heißt, die Kopfbaugruppe muss nun den geänderten Ausbau erneut überprüfen. Dies geschieht zur Laufzeit. Ein Neustart der Kopfbaugruppe ist nicht zwingend notwendig. Dabei ist natürlich zu beachten, dass nun das Optionenmodul und nicht mehr das Reservemodul gesteckt ist. Stimmen jetzt Sollausbau mit dem projektierten Ausbau nicht überein, d.h. ist immer noch das Reservemodul gesteckt oder ein falsches nicht projektiertes Modul, kommt es zu einer Fehlermeldung. Dasselbe Verfahren wird entsprechend angewandt, wenn ein Anwender ein Modul entfernt und wieder steckt.

Die hier beschriebene Verfahren zur Projektierung und Diagnose erlauben eine schnelle und einfache Handhabung von Optionen (Optionenhandling) in einem Automatisierungssystem. Das heißt bei einer Nachrüstung von Optionen zu einem späteren Zeitpunkt, das heißt zur Laufzeit, ist im Automatisierungssystem kein Engineeringmodul notwendig, um die nachgerüsteten Optionen zu projektieren und freizugeben. Vielmehr können schon zum Zeitpunkt der Projektierung alle möglichen Optionen mit Hilfe eines Engineeringtools vorprojektiert werden und zu einem späteren Zeitpunkt einfach mittels dem Steuerbitfeld über die Benutzerschnittstelle freigeschaltet werden.

## Patentansprüche

1. Verfahren zur Projektierung eines modularen Automatisierungssystems, das ein Bussystem mit einer Anzahl von Steckplätzen aufweist, die für Basismodule, Optionenmodule und Reservemodule freischaltbar sind, wobei ein Reservemodul als Platzhalter für zumindest ein Optionenmodul dient, **dadurch gekennzeichnet, dass** ein Statusbitfeld generiert wird, wobei jedem der Steckplätze des Bussystems genau ein Bit des Statusbitfeldes zugeordnet ist, und wobei der logische Zustand jedes der Bits des Statusbitfeldes markiert, ob der Steckplatz für ein Basismodul oder für ein Optionenmodul freigeschaltet ist und dass die Steckplätze, die für ein Optionenmodul freigeschaltet sind, über ein Steuerbitfeld aktiviert oder deaktiviert werden, wobei an den aktivierten Steckplätzen nur das tatsächlich projektierte Optionenmodul zulässig ist, während an den nicht aktivierten Steckplätzen entweder ein Reservemodul oder ein Optionenmodul stecken darf.

2. Verfahren nach Anspruch 1, **dadurch gekennzeichnet, dass** eine logische "1" eines Bits den zugeordneten Steckplatz als für ein Basismodul freigeschaltet markiert und eine logische "0" eines Bits den zugeordneten Steckplatz als für ein Optionenmodul freigeschaltet markiert.

3. Verfahren nach Anspruch 1 oder 2, **dadurch gekennzeichnet, dass** die Steckplätze, die für ein Basismodul freigeschaltet sind, dahingehend überprüft werden, ob das entsprechend projektierte Basismodul angesteckt ist oder nicht.

4. Verfahren nach Anspruch 3, **dadurch gekennzeichnet dass** im Steuerbitfeld eine logische "1" eines Bits den zugeordneten Steckplatz als von einem Optionenmodul belegt markiert und eine logische "0" eines Bits den zugeordneten Steckplatz als von einem Reservemodul belegt markiert.

5. Computerprogrammprodukt zur Ausführung aller Verfahrensschritte zumindest des Verfahrens nach einem der Ansprüche 1 bis 4.

## Claims

1. Method for planning a modular automation system having a bus system that has a number of slots that can be enabled for basic modules, option modules and reserve modules, with a reserve module serving as a space reserving means for at least one option module, **characterised in that** a status bit field is generated, with each of the bus system's slots being assigned precisely one bit of the status bit field and with the logical status of each of the status bit field's bits marking whether the slot has been enabled for a basic module or for an option module, and **in that** the slots enabled for an option module are activated or deactivated via a control bit field, with only the actually planned option module being permissible in the activated slots while either a reserve module or an option module is allowed to be in the non-activated slots.

2. Method according to claim 1, **characterised in that** a logical "1" of a bit marks the assigned slot as being enabled for a basic module and a logical "0" of a bit marks the assigned slot as being enabled for an option module.

3. Method according to claim 1 or 2, **characterised in that** the slots enabled for a basic module are checked to determine whether the accordingly planned basic module has been plugged or not.

4. Method according to claim 3, **characterised in that** in the control bit field a logical "1" of a bit marks the assigned slot as being occupied by an option module and a logical "0" of a bit marks the assigned slot as being occupied by a reserve module.

5. Computer program product for implementing all method steps at least of the method according to one of claims 1 to 4.

## Revendications

1. Procédé de configuration d'un système d'automatisation modulaire qui comporte un système de bus pour un certain nombre de logements de connexion qui peuvent être validés pour des modules de base, pour des modules optionnels et pour des modules de réservation, un module de réservation servant à réserver l'emplacement pour au moins un module optionnel, **caractérisé par le fait que** l'on produit un champ de bits d'état, exactement un bit du champ de bits d'état étant associé à chacun des logements du système de bus et l'état logique de chacun des bits du champ de bits d'état indiquant si le logement est validé pour un module de base ou pour un module optionnel, et que l'on active ou désactive par l'intermédiaire d'un champ de bits de commande les logements qui sont validés pour un module optionnel, seul le module optionnel effectivement configuré étant autorisé dans les logements activés tandis qu'un module de réservation ou un module optionnel peut être connecté dans les logements non activés.

2. Procédé selon la revendication 1, **caractérisé par le fait qu'**un "1" logique d'un bit marque le logement associé comme validé pour un module de base et un "0" logique d'un bit marque le logement associé comme validé pour un module optionnel.

3. Procédé selon la revendication 1 ou 2, **caractérisé par le fait que** l'on vérifie les logements qui sont validés pour un module de base pour savoir si c'est bien le module de base configuré qui est connecté ou non.

4. Procédé selon la revendication 3, **caractérisé par le fait que**, dans le champ de bits de commande, un "1" logique d'un bit marque le logement associé comme occupé par un module optionnel et un "0" logique d'un bit marque le logement associé comme occupé par un module de réservation.

5. Produit formant programme informatique pour la mise en oeuvre de toutes les étapes au moins du procédé selon l'une des revendications 1 à 4.
